# EUROPÄISCHE PATENTSCHRIFT

(11) **EP 2 156 238 B1**
(45) Veröffentlichungstag und Bekanntmachung des Hinweises auf die Patenterteilung: **25.07.2018**
(21) Anmeldenummer: 08718076.6
(22) Anmeldetag: 20.03.2008
(51) Int. Cl.: G02B 27/01, G01C 21/26, B60W 40/072, B60W 40/076, B60W 50/14, G06T 7/246

(54) **VERFAHREN ZUR ANZEIGE EINES FAHRBAHNVERLAUFS UND STEUEREINRICHTUNG**
METHOD FOR DISPLAYING A FORWARD ROADWAY AND CONTROL DEVICE
PROCÉDÉ POUR INDIQUER UN TRACÉ DE CHAUSSÉE ET DISPOSITIF DE COMMANDE

(30) Priorität: 10.04.2007 DE 102007016868
(43) Veröffentlichungstag der Anmeldung: 24.02.2010
(73) Patentinhaber: Robert Bosch GmbH, 70442 Stuttgart (DE)
(72) Erfinder: DAMBIER, Michael, 71665 Vaihingen (DE); GRZESIK, Axel, 70197 Stuttgart (DE); ALTMUELLER, Tobias, 70197 Stuttgart (DE)
(86) Internationale Anmeldenummer: PCT/EP2008/053358
(87) Internationale Veröffentlichungsnummer: WO 2008/122498

(56) Entgegenhaltungen:
- EP-A- 1 264 734
- EP-A- 1 677 272
- WO-A1-2005/053991
- DE-A- 10 359 413
- US-A1- 2007 013 495

## Beschreibung

### Stand der Technik

Die Erfindung geht aus von einem Verfahren zur Anzeige eines Fahrbahnverlaufs und einer Steuereinrichtung nach Gattung der unabhängigen Ansprüche. Aus der DE 103 59 413 A1 ist bereits eine Display-Einrichtung für Kraftfahrzeuge und ein Verfahren zur Kollisionswarnung bekannt. Hierbei weist eine Head-Up-Display-Einrichtung für ein Kraftfahrzeug Objekterfassungsmittel zur Erfassung von außerhalb des Kraftfahrzeugs befindlichen Objekten auf. In einer Anzeigeeinheit werden ausgewählte Objekte dargestellt. Die Geschwindigkeit und eine Bewegungsrichtung von mindestens einem ausgewählten Objekt werden ausgewertet, wobei ein Aktionsbereich der Objekte aus der Geschwindigkeit und der Bewegungsrichtung des jeweiligen Objektes in Bezug zur Geschwindigkeit und zur Bewegungsrichtung des Kraftfahrzeugs bestimmt wird. In der Head-Up-Display-Einrichtung werden die Aktionsbereiche dargestellt. Somit kann ein Fahrer eines Fahrzeugs vor einem Hindernis gewarnt werden, das sich in seinem Fahrweg oder darauf zu bewegt.

Aus der EP 1 677 272 A1 ist eine Anzeigevorrichtung für Fahrzeuge bekannt, bei der mittels einer Projektion Straßenkonturen in einer Head-up-Anzeige basierend auf Straßendaten dargestellt werden.

Aus der WO 2005/053991 A1 ist eine Fahrwegskontrolleinrichtung bekannt, bei der ein Fahrweg eines Fahrzeugs bestimmt und eine Abweichung von dem Fahrweg berechnet wird. Hierbei erfolgt eine Ausgabe an einen Benutzer beispielsweise mit einer Projetionsanzeige. Dabei werden Bereiche des Fahrwegs dargestellt, der für den Benutzer durch eine Windschutzscheibe nicht sichtbar ist, wobei ein bestimmter Fahrweg über andere Einrichtungen des Fahrzeugs, die den Fahrweg verdecken, für den Benutzer projiziert wird.

### Offenbarung der Erfindung

### Vorteile der Erfindung

Das erfindungsgemäße Verfahren mit den Merkmalen des unabhängigen Anspruchs hat dem gegenüber den Vorteil, dass dem Fahrer der Fahrbahnverlauf in geeigneter Weise in einem Head-Up-Display visualisiert wird. Der Fahrer kann somit einerseits schneller und intuitiver erkennen, wo das Fahrzeug hinfährt. Er kann damit auch eine mögliche Kollision mit Hindernissen besser abschätzen.

Andererseits wird der Fahrer durch die Darstellung des optischen Flusses beim Befahren insbesondere von Kurven unterstützt. Denn insbesondere bei Situationen, bei denen der optische Fluss von von dem Fahrer sichtbaren Objekten reduziert ist, fühlt sich ein Fahrer möglicherweise unsicher. Dies ist beispielsweise dann der Fall, wenn infolge von Dunkelheit oder Nebel eine Straßenbegrenzung für den Fahrer gar nicht oder nur schlecht sichtbar ist. Eine schlechte Sichtbarkeit kann sich beispielsweise infolge eines geringen Kontrasts der Fahrbahnoberfläche gegenüber der Umgebung ergeben. Insbesondere im peripheren Sichtbereich nimmt der Fahrer hierbei einen Verlauf der Fahrbahn nur noch schwach oder gar nicht mehr wahr. Wird dem Fahrer dagegen der Fahrbahnverlauf mittels Symbolen zur Darstellung des optischen Flusses von Punkten des Fahrbahnverlaufs in einer Head-Up-Anzeige insbesondere kontaktanalog dargestellt, so kann der Fahrer an der in der Anzeige dargestellten Stelle der Symbole für den optischen Fluss den Fahrbahnverlauf vor dem Fahrzeug intuitiv erfassen. Der Fahrer fühlt sich damit sicherer und Fahrfehler, insbesondere ein unbeabsichtigtes Verlassen der Fahrbahn, können vermieden werden. Auch ohne eine aktive Spurunterstützung oder Spurwarnung wird es dem Fahrer erleichtert, auf einem sicheren Fahrweg dem vorgegebenen Fahrbahnverlauf zu folgen. Hierdurch wird die Fahrsicherheit insbesondere bei schlechten Sichtverhältnissen durch die zusätzliche visuelle Information der Darstellung des optischen Flusses erhöht. Da zudem der optische Fluss nur Teile der Anzeigefläche vor dem Fahrer in der Head-Up-Anzeige benötigt, kann eine unnötige Irritation oder eine Sichtbehinderung des Fahrers vermieden werden und seine Fahrleistung kann erhöht werden.

Durch die in den abhängigen Ansprüchen aufgeführten Maßnahmen sind vorteilhafte Weiterbildungen und Verbesserungen des in dem unabhängigen Anspruch angegebenen Verfahrens möglich. Vorteilhaft ist es, eine Position einer aktuellen Fahrtrichtung des Fahrzeugs aus einer digitalen Karte zu bestimmen. Damit wird es möglich, gegebenenfalls ohne weitere Sensoren, einen möglichen Fahrbahnverlauf vorherzusagen und dem Fahrer in einer Anzeige anzugeben. Hierdurch ist eine Ausgabe von Symbolen zur Darstellung des optischen Flusses auf einfache Weise ohne weitere Sensorik möglich.

Ferner ist es vorteilhaft, eine Fahrzeugumgebung vor dem Fahrzeug mittels einer Kamera zu erfassen und aus einer Bildanalyse von wenigstens zwei zeitlich aufeinanderfolgenden Bildern der Fahrzeugumgebung den Fahrbahnverlauf zu bestimmen. Insbesondere durch eine entsprechende Kontrastverstärkung bei einer Aufnahme des Fahrzeugumgebung vor dem Fahrzeug ist es damit möglich, ebenfalls auf einfache Weise eine entsprechende Information über den optischen Fluss zu erhalten und einem Fahrer darzustellen. Gegebenenfalls kann durch eine direkte Bildauswertung die gewünschte Information zur Darstellung an den Fahrer gewonnen werden. Hierbei ist es vorteilhaft, auch einen Winkelbereich der Fahrzeugumgebung vor dem Fahrzeug mittels einer Kamera zu erfassen, der über den reinen Fahrweg hinausgeht, und aus einer Bildanalyse von wenigstens zwei zeitlich aufeinanderfolgenden Bildern des Winkelbereichs einzelne Objekte oder den gesamten Winkelbereich zu erfassen. Es ist damit möglich, auf einfache Weise eine entsprechende Information über den optischen Fluss zu erhalten und einem Fahrer darzustellen. Gegebenenfalls kann durch eine direkte Bildauswertung die gewünschte Information zur Darstellung an den Fahrer gewonnen werden.

Ferner ist es erfindungsgemäß vorgesehen, eine Blickrichtung des Fahrers zur ermitteln, um eine kontaktanaloge Darstellung der Symbole zur erreichen. Unter einer kontaktanalogen Darstellung ist hierbei eine derartige Darstellung zu verstehen, dass das in die Head-Up-Anzeige eingeblendete Symbol aus Sicht des Fahrers an genau derjenigen Stelle erscheint, an der er das entsprechende Objekt, auf das sich das eingeblendete Symbol bezieht, bei einem Blick durch die Windschutzscheibe auch in der Fahrzeugumgebung sichtbar ist. Hierdurch wird eine für den Fahrer besonders übersichtliche Anzeigendarstellung erreicht.

Ferner ist es vorteilhaft, auch eine Fahrbahnmarkierung in der Mitte der Fahrspur zur erfassen und entsprechend eine Fahrbahnmarkierung in die Darstellung des optischen Flusses einzubeziehen. Hierdurch ist nicht nur eine Begrenzung der Fahrbahn als solche, sondern auch eine Begrenzung der Fahrspur in der Anzeige vorteilhaft darstellbar.

Weiterhin ist es vorteilhaft, auf eine Ebene in der Umgebung der Fahrbahn ein Punktemuster rechnerisch zu projizieren und die somit rechnerisch bestimmten Punkte in eine Darstellung des optischen Flusses mit einzubeziehen. Hierdurch kann auch eine möglicherweise ansonsten dunkle oder einförmige Umgebung mittels der vorgenommenen rechnerischen Maßnahme zur Unterstützung, insbesondere in einem peripheren Sichtbereich des Fahrers, zur Leitung des Fahrers entlang der Fahrspur mit herangezogen werden.

Entsprechende Vorteile ergeben sich für eine erfindungsgemäße Steuereinrichtung für eine Head-Up-Anzeige, die entsprechend eine Schnittstelle zu einer Head-Up-Anzeige aufweist. Durch eine Ermittlungseinheit zur Bestimmung des Fahrbahnverlaufs ist es zudem möglich, eine besonders gute Darstellung des Fahrbahnverlaufs durch eine Anpassung einer Einblendung an einen ermittelten Fahrbahnverlauf zu gewährleisten.

### Kurze Beschreibung der Zeichnungen

Ausführungsbeispiele der Erfindung sind in den Zeichnungen dargestellt und in der nachfolgenden Beschreibung näher erläutert.

Es zeigen:
- Figur 1: eine schematische Aufsicht auf ein Fahrzeug mit einer erfindungsgemäßen Steuereinrichtung zur Durchführung des erfindungsgemäßen Verfahrens,
- Figur 2: einen schematischen Ablauf eines erfindungsgemäßen Verfahrens zur Anzeige eines Fahrbahnverlaufs,
- Figuren 3 bis 5: drei verschiedene Ausführungsbeispiele für eine Darstellung von Symbolen zur Darstellung eines optischen Flusses in eine Head-Up-Anzeige in einem Kraftfahrzeug.

### Ausführungsformen der Erfindung

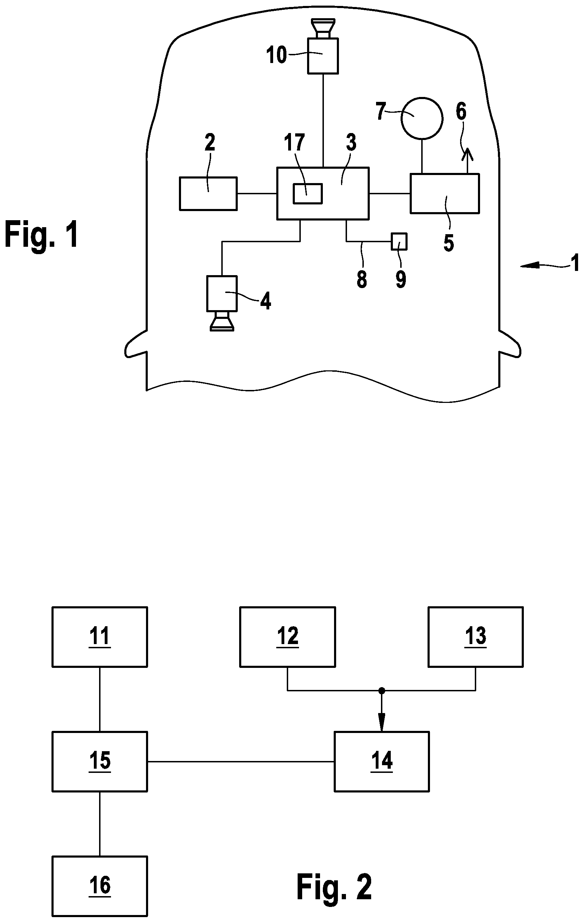

In der Figur 1 ist schematisch eine vordere Hälfte eines Kraftfahrzeugs 1 dargestellt. Eine Head-Up-Projektionseinheit 2 wird von einer Steuereinheit 3 über eine entsprechende Schnittstelle mit einer Bildinformation versorgt, wobei die Steuereinheit 3 zur Datenauswertung und zur Bilddarstellung über eine Recheneinheit 17 verfügt. Die Head-Up-Projektionseinheit 2 projiziert ein virtuelles Bild auf eine Windschutzscheibe vor dem Fahrer, die in der Figur 1 nicht dargestellt ist. Eine Position des Fahrers wird hierbei über eine Erfassungseinheit 4 bestimmt, wobei die Erfassungseinheit 4 beispielsweise als eine Kamera ausgeführt ist. Die Erfassungseinheit 4 kann auch in die Projektionseinheit 2 mit integriert sein. Die Projektionseinheit 2 ist in einer ersten Ausführungsform als eine Laser-Projektionseinheit ausgeführt. Ferner ist es aber auch möglich, ein Bild auf einer Oberfläche einer Flüssigkristallanzeige zur erzeugen und das so erzeugte Bild in die Windschutzscheibe des Fahrzeugs einzuspiegeln.

Der Steuereinheit 3 wird in einer ersten Ausführungsform über eine entsprechende Schnittstelle von einer Navigationseinheit 5 ein Fahrbahnverlauf zugeführt. Der Fahrbahnverlauf wird dabei von der Navigationseinheit 5 derart bestimmt, dass eine Position des Fahrzeugs 1 über eine Ortungseinheit 6 bestimmt wird, beispielsweise eine Satellitenortungseinheit. Unter Zugriff auf eine in einer Speichereinheit 7 abgelegte digitale Karte kann aus den Positions- und Fahrtrichtungsdaten des Fahrzeugs, die ebenfalls von der Navigationseinheit 5 aus der Positionsänderung bestimmt werden, ein Fahrbahnverlauf vor dem Fahrzeug ermittelt werden. Die Steuereinheit 3 bestimmt einen optischen Fluss von Punkten, die die Fahrbahn begrenzen. Hierbei kann die Fahrzeuggeschwindigkeit berücksichtigt werden, die sich aus der Positionsänderung des Fahrzeugs ergibt. In einer anderen Ausführungsform kann auch über einen Datenbus 8 ein Wegsensor 9 abgefragt werden, der beispielsweise über eine Auswertung der Raddrehung eine von dem Fahrzeug zurückgelegte Wegstrecke und damit auch die Geschwindigkeit des Fahrzeugs bestimmen kann.

Für die Darstellung des Flusses können zunächst beliebige Punkte der Fahrzeugumgebung herausgegriffen werden. In der Darstellung sollten sich dann jedoch gegebenenfalls dargestellte Punkte in einem Fahrbahnbereich von gegebenenfalls dargestellten Punkten einer Fahrbahnumgebung unterscheiden.

Die Darstellung des optischen Flusses wird beispielsweise derart bestimmt, das Punkte einer Fahrbahn- oder Fahrspurbegrenzung, beispielsweise eines Fahrbahnrandes oder Punkte beider Fahrbahnränder, vor dem Fahrzeug rechnerisch von der Steuereinheit 3 herausgegriffen werden. Diese Punkte können beispielsweise jeweils einen Abstand von fünf Metern zueinander aufweisen. Aufgrund der aktuellen Fahrzeuggeschwindigkeit wird linear eine Position dieses Punktes bei einer linearen Fortbewegung des Fahrzeugs entlang der Fahrbahn für einen vorgegebenen Zeitraum, beispielsweise eine halbe Sekunde, vorausbestimmt. Der sich nunmehr für jeden der einzelnen Punkte jeweils ergebende neue Punkt infolge dieser Verschiebung wird mit dem Ausgangspunkt nun durch eine Linie verbunden, um ein Symbol für die Darstellung des optischen Flusses zu erhalten. Die sich hieraus ergebenden Symbole, also kleine Striche, werden in den Sichtbereich des Fahrers in die Windschutzscheibe über die Projektionseinheit 2 eingeblendet. Der Fahrer kann somit den optischen Fluss des rechnerisch bestimmten Fahrbahnverlaufs erfassen.

Anstelle der dargestellten Linien-Symbole können auch andere Symbole, wie beispielsweise Punktdarstellungen oder Pfeildarstellungen, den optischen Fluss darstellen. In einer weiteren Ausführungsform ist es auch möglich, virtuelle Seitenpfosten zur Darstellung der Begrenzung des Fahrbahnverlaufs in der Anzeige darzustellen. Ein Fahrer kann sich dann besonders gut über den Verlauf der Strasse vor ihm informieren, wenn ihm die korrekte Krümmung durch die Darstellung des optischen Flusses angezeigt wird.

In einer weiteren Ausführungsform kann der optische Fluss auch über eine Bildauswertung eines Kamerabildes erfolgen, wobei eine Kamera 10 den Fahrraum und/oder die Umgebung des Fahrraums vor dem Fahrzeug erfasst. Zu zwei aufeinanderfolgenden Zeitpunkten, beispielsweise versetzt um 0,1 Sekunde, werden zwei Bilder aufgenommen. Aufgrund der geringen Fahrstrecke lässt sich der optische Versatz zwischen den beiden aufgenommen Bildern ermitteln, wobei die einzelnen Punkte zu den beiden Zeitpunkten jeweils einander zugeordnet werden. Nach einer vorgegebenen Vorschrift werden Bildpunkte, beispielsweise Bildpunkte in einem Abstand von 50 Pixeln, einzeln herausgegriffen, wobei der jeweils herausgegriffene Punkt zu dem frühen Zeitpunkt mit dem Punkt zu dem späten Zeitpunkt jeweils durch eine Linie verbunden wird. Nur diese sich hieraus ergebenen Strichsymbole werden über die Projektionseinheit 2 dem Fahrer angezeigt.

In der Figur 2 ist ein schematischer Ablauf des erfindungsgemäßen Verfahrens dargestellt. In einem ersten Erfassungsschritt 11 wird die Kopfposition des Fahrers erfasst. Die Kopfposition wird dabei, wie bereits oben erläutert, durch eine Erfassungseinheit der Projektionseinheit oder eine damit verbundene Erfassungseinheit der Kopfposition ermittelt. In einem zweiten Erfassungsschritt 12 wird die Position des Fahrzeugs auf der Strasse ermittelt. In einer ersten Ausführungsform kann diese Ermittlung über eine Satellitenortung erfolgen, beispielsweise über einen GPS-Empfänger. In einer weiteren Ausführungsform ist es auch möglich, die Position des Fahrzeugs auf der Strasse durch eine Spurhalteunterstützung bzw. eine Spurverlassenswarnung zu erfassen. Die somit erfasste Position wird mit Kartendaten in einem Auswerteschritt 13 verbunden, so dass in einem Berechnungsschritt 14 der optische Fluss von ortsfesten Punkten der Fahrbahn und/oder der Umgebung der Fahrbahn bestimmt werden kann. In einem Korrekturschritt 15 wird der somit erhaltene berechnete optische Fluss an die Kopfposition und damit an die Augenposition des Fahrers angepasst. In einem nachfolgenden Anzeigeschritt 16 werden in einer entsprechenden Anzeige die berechneten Symbole zur Darstellung des optischen Flusses in der Head-Up-Anzeige des Fahrzeugs dargestellt.

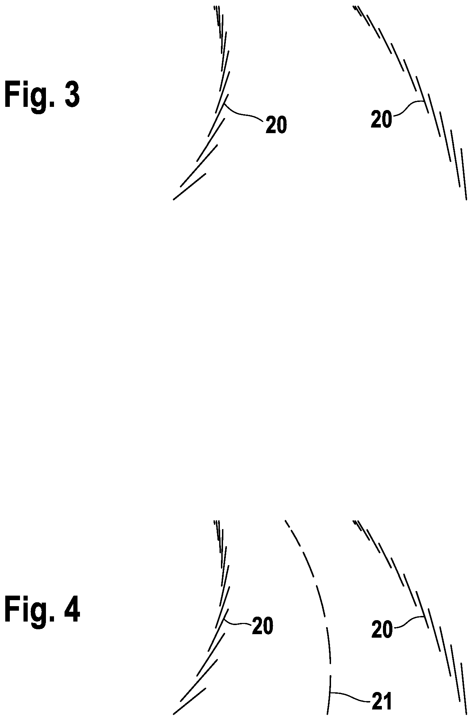

In der Figur 3 ist ein erstes Ausführungsbeispiel für eine Darstellung eines optischen Flusses zur Darstellung eines Fahrbahnverlaufs gezeigt. Entsprechende Symbole 20 sowohl für einen rechten Fahrbahnrand, als auch für einen linken Fahrbahnrand werden vorzugsweise in Form eines virtuellen Bildes auf die Windschutzscheibe projiziert. Mit zunehmendem Abstand von dem Fahrzeug werden die Symbole kleiner, da durch den größeren Abstand ein entsprechend kleinerer optischer Fluss des jeweiligen raumfesten Punktes erfolgt.

Eine Darstellung des optischen Flusses kann ausgehend von dem Fahrzeug bis zu einem vorgegebenen Abstand von beispielsweise 100 Metern vor dem Fahrzeug dargestellt werden. Der optische Fluss kann sich hierbei gemäß einer Ausführungsform an der Sichtbarkeit des entsprechenden Fahrbahnabschnittes orientieren. Führt also die Fahrbahn um eine Kurve, so dass ein Bereich hinter der Kurve für den Fahrer nicht sichtbar ist, so wird dieser Bereich auch in der Darstellung des optischen Flusses nicht mehr angezeigt.

In einer weiteren Ausführungsform in der Figur 4 ist zusätzlich eine Darstellung des optischen Flusses mit einer Mittelmarkierung 21 dargestellt. Ein entsprechender optischer Fluss der Mittelmarkierung wird dabei in einer Ausführungsform unabhängig von einer tatsächlich vorhandenen Mittelmarkierung dargestellt. Sind keine Daten zu einer Mittelmarkierung vorhanden oder kann eine Mittelmarkierung von einer Kamera nicht erfasst werden, so wird in dieser Ausführungsform rechnerisch eine Mittelmarkierung aus dem ermittelten Abstand zwischen den beiden Fahrbahnrändern bestimmt.

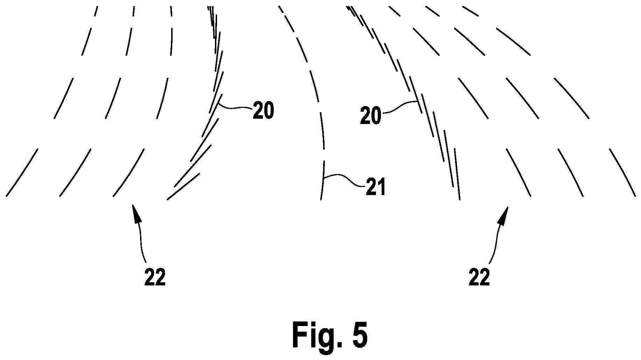

In einer weiteren Ausführungsform ist in der Figur 5 zusätzlich eine Darstellung des optischen Flusses 22 in der Umgebung der Fahrbahn dargestellt. Hierzu werden Punkte der Ebene auf ein Raster projiziert und ausgehend von der Position des Fahrzeugs wird der optische Fluss dieser Rasterpunkte nunmehr bestimmt und zur Anzeige gebracht. Insbesondere für den Fall, dass eine Umgebung außerhalb des Fahrbahnverlaufs für den Fahrer nicht sichtbar ist, also beispielsweise bei Nebel oder bei Dunkelheit, kann somit ein optischer Fluss auch in einem Bereich außerhalb der Fahrbahn simuliert und zur Anzeige gebracht werden. Damit kann die intuitive Orientierung des Fahrers, der den Bereich 22 insbesondere in seinem peripheren Sehbereich wahrnimmt, weiter verbessert werden. Bei einer Darstellung der Umgebung des Fahrraums kann auf eine Erfassung bzw. auf eine Darstellung der Fahrbahn selbst auch verzichtet werden, da durch eine Darstellung des optischen Flusses, der auf die Umgebung der Fahrbahn bezogen ist, sich eine Ausrichtung der Fahrbahn indirekt ergibt und für den Fahrer in der Head-Up-Anzeige erkennbar ist. Wird in der Darstellung genau die Fahrbahn bei der Darstellung des optischen Flusses der Umgebung weggelassen, ist der Fahrbahnverlauf für den Fahrer unmittelbar erkennbar. Eine Erfassung der Fahrbahn kann in einer weiteren Ausgestaltung dieser Ausführungsform jedoch dazu verwendet werden, eine Überlappung der Projektion der Umgebung mit der Fahrbahn zu verhindern.

## Patentansprüche

1. Verfahren zur Anzeige eines Fahrbahnverlaufs vor einem Fahrzeug (1), wobei eine aktuelle Geschwindigkeit des Fahrzeugs (1) bestimmt wird, wobei vor dem Fahrzeug (1) liegende Punkte einer Fahrzeugumgebung bestimmt werden und wobei ein optischer Fluss dieser Punkte unter Berücksichtigung der aktuellen Fahrzeuggeschwindigkeit bestimmt wird, **dadurch gekennzeichnet, dass** Symbole (20, 21, 22) zur Darstellung des optischen Flusses für eine Darstellung des Fahrbahnverlaufs in eine Head-Up-Anzeige eingeblendet werden, dass eine Blickrichtung des Fahrers ermittelt wird und dass die Symbole (20, 21, 22) derart in die Head-Up-Anzeige eingeblendet werden, dass ein eingeblendetes Symbol aus Sicht des Fahrers einen Punkt, auf den das Symbol bezogen ist, überdeckt oder berührt.

2. Verfahren nach Anspruch 1, **dadurch gekennzeichnet, dass** eine Position und eine aktuelle Fahrtrichtung des Fahrzeugs (1) bestimmt werden und dass ein Fahrbahnverlauf in Fahrtrichtung ausgehend von der aktuellen Position des Fahrzeugs (1) aus einer digitalen Karte bestimmt wird.

3. Verfahren nach einem der vorhergehenden Ansprüche, **dadurch gekennzeichnet, dass** eine Kamera (10) eine Fahrzeugumgebung vor dem Fahrzeug (1) erfasst und dass zur Ermittlung des Fahrbahnverlaufs eine Veränderung von Positionen von Bildpunkten in wenigstens zwei zeitlich aufeinanderfolgenden Bildern der Fahrzeugumgebung bestimmt werden.

4. Verfahren nach einem der vorhergehenden Ansprüche, **dadurch gekennzeichnet, dass** Punkte entlang einer mittleren Fahrbahnmarkierung bestimmt werden, dass ein optischer Fluss der Punkte unter Berücksichtigung der aktuellen Fahrzeuggeschwindigkeit bestimmt wird und dass Symbole (21) zur Darstellung des optischen Flusses der Punkte zur Darstellung der Fahrbahnmarkierung in die Head-Up-Anzeige eingeblendet werden.

5. Verfahren nach einem der vorhergehenden Ansprüche, **dadurch gekennzeichnet, dass** einem Bereich außerhalb der Fahrbahn ein auf eine Ebene projiziertes Punktemuster zugeordnet wird, dass ein optischer Fluss der Punkte unter Berücksichtigung der aktuellen Fahrzeuggeschwindigkeit bestimmt wird und dass Symbole zur Darstellung des optischen Flusses der Punkte zur Darstellung der Fahrbahnmarkierung in die Head-Up-Anzeige eingeblendet wird.

6. Steuereinrichtung (3) für eine Head-Up-Anzeige (2) in einem Fahrzeug (1) mit einer Schnittstelle (8) zu einem Wegsensor (9) zur Bestimmung der Geschwindigkeit des Fahrzeugs und mit einer Schnittstelle zu der Head-Up-Anzeige (2) zur Ausgabe von Fahrhinweisen, mit einer Recheneinheit (17) zur Bestimmung von Punkten in einer Umgebung vor dem Fahrzeug, zur Bestimmung eines optischen Flusses der Punkte unter Berücksichtigung der aktuellen Fahrzeuggeschwindigkeit und zur Bestimmung von Symboldarstellungen (20, 21, 22) für eine Darstellung des optischen Flusses in der Head-Up-Anzeige (2), **gekennzeichnet durch** eine Einheit zur Erfassung einer Blickrichtung eines Fahrers zur kontaktanalogen Darstellung der Symboldarstellungen (20, 21, 22) in der Head-Up-Anzeige, wobei die Symbole (20, 21, 22) derart in die Head-Up-Anzeige eingeblendet werden, dass ein eingeblendetes Symbol aus Sicht des Fahrers einen Punkt, auf den das Symbol bezogen ist, überdeckt oder berührt.

7. Steuereinrichtung nach Anspruch 6, **gekennzeichnet durch** eine Schnittstelle zu einer Ermittlungseinheit (5) zur Ermittlung eines Fahrbahnverlaufs vor dem Fahrzeug.

## Claims

1. Method for displaying a road course in front of a vehicle (1), wherein a current speed of the vehicle (1) is determined, wherein points of a vehicle environment in front of the vehicle (1) are determined, and wherein an optical flow of these points is determined taking into account the current vehicle speed, **characterized in that** symbols (20, 21, 22) for representing the optical flow for representing the road course are displayed in a head-up display, **in that** a viewing direction of the driver is determined, and **in that** the symbols (20, 21, 22) are displayed in the head-up display in such a manner that a displayed symbol covers or touches a point on which the symbol is based from the point of view of the driver.

2. Method according to Claim 1, **characterized in that** a position and a current direction of travel of the vehicle (1) are determined, and **in that** a road course in the direction of travel starting from the current position of the vehicle (1) is determined from a digital map.

3. Method according to one of the preceding claims, **characterized in that** a camera (10) captures a vehicle environment in front of the vehicle (1), and **in that** a change in positions of pixels in at least two temporally successive images of the vehicle environment is determined in order to determine the road course.

4. Method according to one of the preceding claims, **characterized in that** points along a middle road marking are determined, **in that** an optical flow of the points is determined taking into account the current vehicle speed, and **in that** symbols (21) for representing the optical flow of the points for representing the road marking are displayed in the head-up display.

5. Method according to one of the preceding claims, **characterized in that** a point pattern projected onto a plane is assigned to a region outside the road, **in that** an optical flow of the points is determined taking into account the current vehicle speed, and **in that** symbols for representing the optical flow of the points for representing the road marking are displayed in the head-up display.

6. Control device (3) for a head-up display (2) in a vehicle (1), having an interface (8) to a position sensor (9) for determining the speed of the vehicle and having an interface to the head-up display (2) for outputting driving instructions, and having a computing unit (17) for determining points in an environment in front of the vehicle, for determining an optical flow of the points taking into account the current vehicle speed and for determining symbol representations (20, 21, 22) for representing the optical flow in the head-up display (2), **characterized by** a unit for capturing a viewing direction of a driver for the contact-analogue representation of the symbol representations (20, 21, 22) in the head-up display, wherein the symbols (20, 21, 22) are displayed in the head-up display in such a manner that a displayed symbol covers or touches a point on which the symbol is based from the point of view of the driver.

7. Control device according to Claim 6, **characterized by** an interface to a determination unit (5) for determining a road course in front of the vehicle.

## Revendications

1. Procédé d'affichage du tracé d'une chaussée devant un véhicule (1), une vitesse actuelle du véhicule (1) étant déterminée, des points d'un environnement du véhicule qui se trouvent devant le véhicule (1) étant déterminés et un flux optique de ces points étant déterminé en tenant compte de la vitesse actuelle du véhicule, **caractérisé en ce que** des symboles (20, 21, 22) destinés à représenter le flux optique pour une représentation du tracé de la chaussée sont affichés en incrustation dans un afficheur tête haute, qu'une direction de visée du conducteur est déterminée et que les symboles (20, 21, 22) sont affichés en incrustation dans l'afficheur tête haute de telle sorte qu'un symbole affiché en incrustation, du point de vue du conducteur, recouvre ou touche un point auquel se rapporte le symbole.

2. Procédé selon la revendication 1, **caractérisé en ce qu'**une position et un sens de circulation actuel du véhicule (1) sont déterminés et **en ce qu'**un tracé de la chaussée dans le sens de circulation est déterminé à partir d'une carte numérique en partant de la position actuelle du véhicule (1).

3. Procédé selon l'une des revendications précédentes, **caractérisé en ce qu'**une caméra (10) enregistre un environnement de véhicule devant le véhicule (1) et **en ce qu'**une modification de positions de pixels dans au moins deux images chronologiquement successives de l'environnement du véhicule est définie en vue de déterminer le tracé de la chaussée.

4. Procédé selon l'une des revendications précédentes, **caractérisé en ce que** des points le long d'un marquage central de la chaussée sont déterminés, **en ce qu'**un flux optique des points est déterminé en tenant compte de la vitesse actuelle du véhicule et **en ce que** des symboles (21) destinés à représenter le flux optique des points sont affichés en incrustation dans l'afficheur tête haute en vue de représenter le marquage de la chaussée.

5. Procédé selon l'une des revendications précédentes, **caractérisé en ce qu'**un modèle de points projeté sur un plan est associé à une zone en-dehors de la chaussée, **en ce qu'**un flux optique des points est déterminé en tenant compte de la vitesse actuelle du véhicule et **en ce que** des symboles destinés à représenter le flux optique des points sont affichés en incrustation dans l'afficheur tête haute en vue de représenter le marquage de la chaussée.

6. Dispositif de commande (3) pour un afficheur tête haute (2) dans un véhicule (1), comprenant une interface (8) avec un capteur de course (9) servant à déterminer la vitesse du véhicule et comprenant une interface avec l'afficheur tête haute (2) servant à délivrer des instructions de conduite, comprenant une unité de calcul (17) destinée à déterminer des points dans un environnement du véhicule, destinée à déterminer un flux optique des points en tenant compte de la vitesse actuelle du véhicule et destinée à déterminer des représentations symboliques (20, 21, 22) pour une représentation du flux optique dans l'afficheur tête haute (2), **caractérisé par** une unité destinée à détecter une direction de visée d'un conducteur en vue d'une représentation analogue à un contact des représentations symboliques (20, 21, 22) dans l'afficheur tête haute, les symboles (20, 21, 22) étant affichés en incrustation dans l'afficheur tête haute de telle sorte qu'un symbole affiché en incrustation, du point de vue du conducteur, recouvre ou touche un point auquel se rapporte le symbole.

7. Dispositif de commande selon la revendication 6, **caractérisé par** une interface avec une unité de détermination (5) destinée à déterminer le tracé d'une chaussée devant le véhicule.
